# EUROPEAN PATENT APPLICATION

(11) **EP 1 036 681 A1**
(43) Date of publication of application: **20.09.2000**
(21) Application number: 00104921.2
(22) Date of filing: 08.03.2000
(51) Int. Cl.: B60J 1/14

(54) **"A servo-assisted system for opening and closing the side windows of a motor vehicle"**

(30) Priority: 09.03.1999 IT TO990039 U
(71) Applicant: ITALDESIGN-GIUGIARO S.p.A, 10121 Torino (IT)
(72) Inventor: Giugiaro, Fabrizio, 10024 Moncalieri (IT)
(74) Representative: Fioravanti, Corrado

(57) **Abstract**

A side door (6) is pivoted at the front to the vehicle body about a vertical axis (7) for opening and closing by rotating in a horizontal plane, and is associated with a side window (4) pivoted at the top to a part of the roof (3) of the vehicle about a horizontal longitudinal pivot axis (5), for opening and closing by oscillating in a transverse vertical plane independently of the door (6). A hydraulic cylinder (9) is pivoted (10) securely to the vehicle body about a horizontal longitudinal axis and has an extendable piston rod (11) pivoted at the top (12) to the window (4). A microswitch (13) provided for activating the hydraulic cylinder (9, 11), is operatively associated with a handle (14) for opening the door (6).

## Description

The present invention refers to a servo-assisted system for opening and closing the side windows of a motor vehicle.

The object of the present invention is to provide a system for opening and closing the side windows which improves access to a motor vehicle of the type in which the side doors and the windows therein are mounted so as to open by moving independently in perpendicular planes.

This object is achieved according to the present invention by a servo-assisted system having the features claimed in Claim 1.

A further object of the present invention is to provide a secure locking of the windows to the relevant doors at high speeds for motor vehicles of the above type.

This further object is achieved, still according to the present invention, by providing a system having the features specified in Claim 3.

The characteristics and advantages of the invention will become apparent from the detailed description of one embodiment thereof, with reference to the appended drawings, provided purely by way of non-limitative example, in which:
Figure 1 is a partial perspective view of a motor vehicle having the system of the present invention, with the side doors and windows closed;
Figure 2 is a partial perspective view of the motor vehicle of Figure 1 with a side window partially opened;
Figure 3 is a partial perspective view of the motor vehicle of Figure 1 with a window and the associated side door partially opened; and
Figure 4 is a partial transversal vertical section which schematically illustrates the arrangement of the servo-assisted system of the invention.

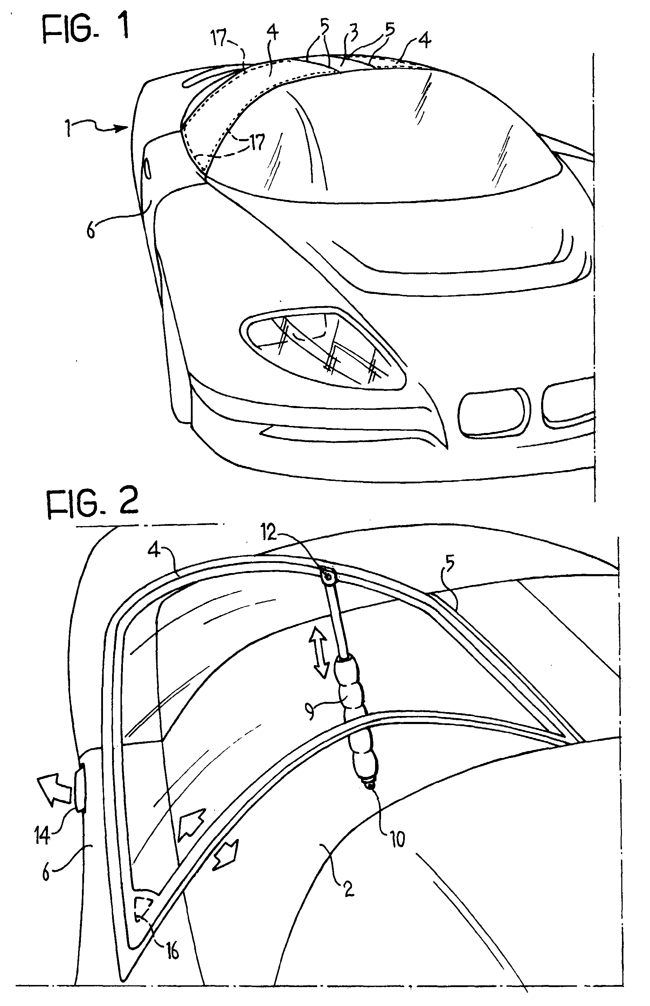

With reference to Figures 1, 2 and 3, a motor vehicle generally indicated 1 has side openings 2 in the body which extend towards the centre of the roof so as to form an upper central portion 3 between them in the shape of a longitudinal beam.

As used here, the terms "longitudinal" and "transverse" are to be interpreted as referred to the longitudinal centreline of the vehicle, unless indicated otherwise.

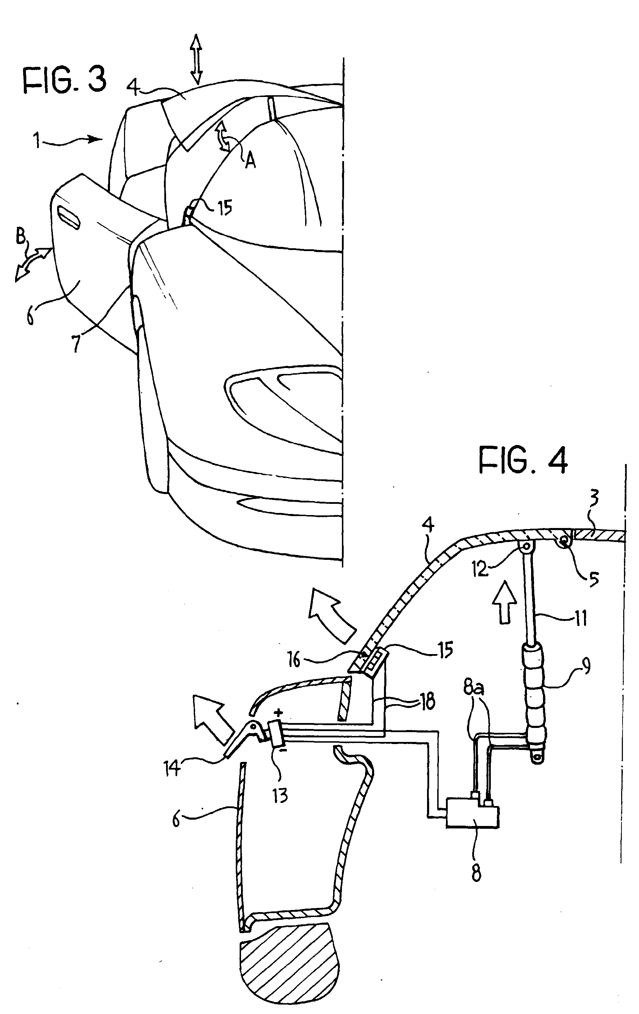

The upper portions of the side windows, which are indicated 4, are curved and extend to the upper central beam 3, being pivoted thereon at points schematically indicated 5, so as to open and close by oscillating in a transverse vertical plane, as indicated by the arrows A in Figure 3.

The side doors of the motor vehicle, indicated 6, are pivoted at the front to the body at pivot points 7 about respective vertical axes so as to open and close by turning in a horizontal plane (Figure 3, arrow B)

In the closed configuration illustrated in Figure 1, the windows 4 rest externally on one or more sealing strips, illustrated schematically by a dotted line and indicated 17, mounted on the upper edges of the doors 6 and on the border of the openings 2.

With reference to Figure 4, the opening and closing movement of the windows 4 is controlled by a servo-assisted system comprising a pump 8 which feeds, through a hydraulic circuit 8a, a pair of hydraulic cylinders 9, one for each window, operable to control the opening and closing movements of the respective side windows 4. Each cylinder 9 is pivoted on the vehicle body at 10 so that it has limited freedom to oscillate in a transverse vertical plane, and includes a piston with a rod 11, the upper end of which is securely pivoted at 12 to the side window 4. The extension and retraction of the piston rod cause the associated window to open and close respectively.

Still with reference to Figure 4, a microswitch 13 which controls the operation of the pump 8 is mounted on the door 6 near a handle 14, of conventional type, which operates the door lock and enables the door to be opened.

The microswitch 13 is operatively connected to the handle 14, whereby the latter acts on the microswitch 13 during its opening movement, causing the pump 8 to start, the piston to extend as a result and the oscillating window 4 to open. By acting on the handle, the door 6 and the window 4 can be opened substantially simultaneously.

The microswitch 13 is preferably positioned in such a way that it is activated by the handle 14 before the latter reaches the angular position in which it controls the release of the lock. In this way, the window is raised just before the moment in which the door is opened outwards, thereby avoiding any interference between the window and the door during the first part of their different opening movements.

The opening and closing movements of the side windows can of course also be controlled independently of the opening of the doors from inside the vehicle by means of push-buttons (not shown).

In Figures 3 and 4, an electromagnet, indicated 15, is mounted on the door 6 at the position of the lower front corner of the window 4 in its closed position. The window has a ferromagnetic plate 16 at this corner which is attracted to the electromagnet 15 when this is activated, thereby securely holding the window 4 in its closed position pressing against the door. This device proves useful especially when the vehicle is travelling at high speed; in fact, over a certain threshold, the air which flows over the vehicle tends to lift the window from its closed position.

The electromagnet 15 is preferably connected to an on-board electronic processing unit (not illustrated) operable to activate it automatically when the vehicle exceeds a certain speed threshold, above which it is necessary to counter the aerodynamic action tending to lift the window. Alternatively, the electromagnet 15 could be activated in other conditions of use than those described above, but it should, in any case, be connected to the microswitch 13 and to in-vehicle control buttons by means of an appropriate circuit 18, in such a way that it is automatically deactivated when the window is controlled to open or when it is in an open position.

## Claims

1. A servo-assisted system for opening and closing the side windows of a motor vehicle with
at least one side door (6) pivoted to the vehicle body by its front portion about a vertical axis (7) so that it opens and closes by rotating in a horizontal plane,
at least one side window (4) associated with the said door (6) and pivoted (5) to a portion of the roof (3) of the vehicle about a substantially longitudinal and horizontal pivot axis, for opening and closing by oscillating in a transverse vertical plane independently of the respective door,
characterised in that it includes
- at least one actuator means (9, 11) with a portion (9) securely pivoted (10) to the vehicle body about a horizontal longitudinal axis and an extendable portion (11) pivoted (12) to the said window (4), and
- at least one switch means (13) for activating the said actuator (9, 11), operatively associated with a handle (14) for opening the said door (6).

2. A servo-assisted system according to Claim 1, characterised in that the said switch means (13) are associated with the handle (14) so as to be activated slightly before the door is released.

3. A servo-assisted system according to Claim 1, characterised in that the door (6) has at least one retaining means (15) arranged at the lower front corner of the window (4), operable to interact with an element (16) securely fixed to the window (4) so as to hold the window in its closed position.

4. A servo-assisted system according to Claim 3, characterised in that the said retaining means (15) is arranged to be activated automatically when the vehicle exceeds a predetermined speed.

5. A servo-assisted system according to Claim 3, characterised in that the said retaining means (15) is an electromagnet.
